# EUROPEAN PATENT APPLICATION

(11) **EP 4 645 546 A1**
(43) Date of publication of application: **05.11.2025**
(21) Application number: 24174072.9
(22) Date of filing: 03.05.2024
(51) Int. Cl.: H01M 50/213, H01M 50/503, H01M 10/42, H01M 10/6551, H01M 10/6554, H01M 50/509

(54) **BATTERY DEVICE AND ELASTIC CONDUCTIVE ELEMENT THEREOF**

(71) Applicant: Keelgoal Energy Co., Ltd., Zhubei City, Hsinchu County 302 (TW)
(72) Inventor: HSIAO, Yih-Wen, 302 Zhubei City, Hsinchu County (TW); CHEN, Ying-Jui, 302 Zhubei City, Hsinchu County (TW); CHEN, Yen-Ling, 302 Zhubei City, Hsinchu County (TW)
(74) Representative: Viering, Jentschura & Partner mbB Patent- und Rechtsanwälte

(57) **Abstract**

A battery device (100) and an elastic conductive element (34) thereof are provided. The elastic conductive element (34) includes a plate body portion (341), a plurality of bend portions (342), a plurality of connecting portions (343), and a plurality of end portions (344). The bend portions (342) extend from the plate body portion (341). The connecting portions (343) respectively extend from the bend portions (342). Each of the connecting portions (343) and the plate body portion (341) are spaced apart from each other, so as to have a first height change (H1). The end portions (344) respectively extend from the connecting portions (343), so as to elastically abut against a corresponding one of the electric cores through the connecting portions (343).

## Description

### FIELD OF THE INVENTION

The present invention relates to a device, and more particularly to a battery device and an elastic conductive element thereof.

### BACKGROUND OF THE INVENTION

A conventional battery device uses a welding machine to weld a metal sheet and an electric core to complete a connection of batteries, so as to ensure an electrical reliability between the metal sheet and the electric core. However, the aforementioned manner can easily lead to difficulties and dangers during operations of battery recycling or partial damage replacement, because guide strips welded to the electric core need to be dismantled by personnel one by one, which is complex and highly risky (e.g., damaging the electric core, or an explosion of the electric core).

### SUMMARY OF THE INVENTION

In response to the above-referenced technical inadequacy, the present invention provides a battery device and an elastic conductive element thereof.

In order to solve the above-mentioned problems, one of the technical aspects adopted by the present invention is to provide a battery device. The battery device includes a containing shell, a control module, and a battery module. The containing shell has an accommodation space. The control module is disposed in the accommodation space. The battery module is disposed in the accommodation space. The battery module is electrically coupled to the control module, and includes an insulating carrier, a plurality of electric cores, two substrates, and a plurality of elastic conductive elements. The insulating carrier has a plurality of accommodation grooves. The electric cores are respectively disposed in the accommodation grooves. The two substrates are disposed on two sides of the insulating carrier. The elastic conductive elements are disposed on and electrically coupled to the two substrates such that the electric cores are configured to contact the elastic conductive elements to achieve series or parallel connections. Each of the elastic conductive elements includes a plate body portion, a plurality of bend portions, a plurality of connecting portions, and a plurality of end portions. The bend portions extend from the plate body portion. The bend portions are spaced apart from each other. The connecting portions respectively extend from the bend portions. Each of the connecting portions and the plate body portion are spaced apart from each other, so as to have a first height change that gradually increases from the bend portions on a center area of the plate body portion. The end portions respectively extend from the connecting portions. Each of the end portions is configured to elastically abut against a corresponding one of the electric cores through the connecting portions.

In one of the possible or preferred embodiments, each of the end portions and the plate body portion are spaced apart from each other, so as to have a second height change that gradually decreases or increases from the bend portions on the central area of the plate body portion.

In one of the possible or preferred embodiments, each of the elastic conductive elements includes a plurality of concave grooves, each of the concave grooves is formed in a position between the connecting portion and the end portion that are connected to each other, and a depth of each of the concave grooves is less than or equal to half a thickness of the connecting portion and the end portion.

In one of the possible or preferred embodiments, each of a plurality of projection regions formed by orthogonally projecting the connecting portion and the end portion connected to each other on the plate body portion (341) is triangular.

In one of the possible or preferred embodiments, any two adjacent ones of the projection regions has one of a plurality of separation distances therebetween, and the separation distances are equal to each other.

In one of the possible or preferred embodiments, the plate body portion of each of the elastic conductive elements is in a shape of a regular polygon with N number of sides, N being a positive integer greater than or equal to three, and a quantity of the bend portions, the connecting portions, and the end portions of each of the elastic conductive element has a value of N.

In one of the possible or preferred embodiments, the plate body portion includes a protruding block protruding in a direction away from the connecting portions, and an area of the protruding block is greater than half an area of a side of the plate body portion away from the connecting portions.

In one of the possible or preferred embodiments, the substrate includes an insulating thermal conductive plate and an aluminum plate, and a plurality of conductive lines are printed on the aluminum plate, and the aluminum plate contacts the insulating thermal conductive plate.

In order to solve the above-mentioned problems, another one of the technical aspects adopted by the present invention is to provide an elastic conductive element of battery device. The elastic conductive element includes a plate body portion, a plurality of bend portions, a plurality of connecting portions, and a plurality of end portions. The bend portions extend from the plate body portion. The bend portions are spaced apart from each other. The connecting portions respectively extend from the bend portions. Each of the connecting portions and the plate body portion are spaced apart from each other, so as to have a first height change that gradually increases from the bend portions on a center area of the plate body portion. The end portions respectively extend from the connecting portions. Each of the end portions is configured to elastically abut against a corresponding one of the electric cores through the connecting portions.

In one of the possible or preferred embodiments, each of the end portions and the plate body portion are spaced apart from each other, so as to have a second height change that gradually decreases or increases from the bend portions on the central area of the plate body portion. The elastic conductive element includes a plurality of concave grooves, each of the concave grooves is formed in a position between the connecting portion and the end portion that are connected to each other, and a depth of each of the concave grooves is less than or equal to half a thickness of the connecting portion and the end portion.

Therefore, in the battery device and the elastic conductive element thereof provided by the present invention, by virtue of "the connecting portions respectively extending from the bend portions, and each of the connecting portions and the plate body portion being spaced apart from each other, so as to have a first height change that gradually increases from the bend portions on a center area of the plate body portion," and "each of the end portions being configured to elastically abut against a corresponding one of the electric cores through the connecting portions," the battery device and the elastic conductive element thereof can use a contact manner to achieve ideal electrical reliability between the elastic conductive element and the electric core.

These and other aspects of the present invention will become apparent from the following description of the embodiment taken in conjunction with the following drawings and their captions, although variations and modifications therein may be affected without departing from the spirit and scope of the novel concepts of the invention.

### BRIEF DESCRIPTION OF THE DRAWINGS

The described embodiments may be better understood by reference to the following description and the accompanying drawings, in which:
FIG. 1 is a schematic perspective view of a battery device according to the present invention;
FIG. 2 is a schematic exploded view of the battery device according to the present invention;
FIG. 3 is a schematic perspective view of a battery module according to the present invention;
FIG. 4 is a schematic exploded view of the battery module according to the present invention;
FIG. 5 is a schematic partially exploded view of the battery module according to the present invention;
FIG. 6 is a schematic perspective view of an elastic conductive element according to the present invention;
FIG. 7 is another schematic perspective view of the elastic conductive element according to the present invention;
FIG. 8 is a schematic top view of the elastic conductive element according to the present invention; and
FIG. 9 is a schematic cross-sectional view taken along line IX-IX of FIG. 8.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

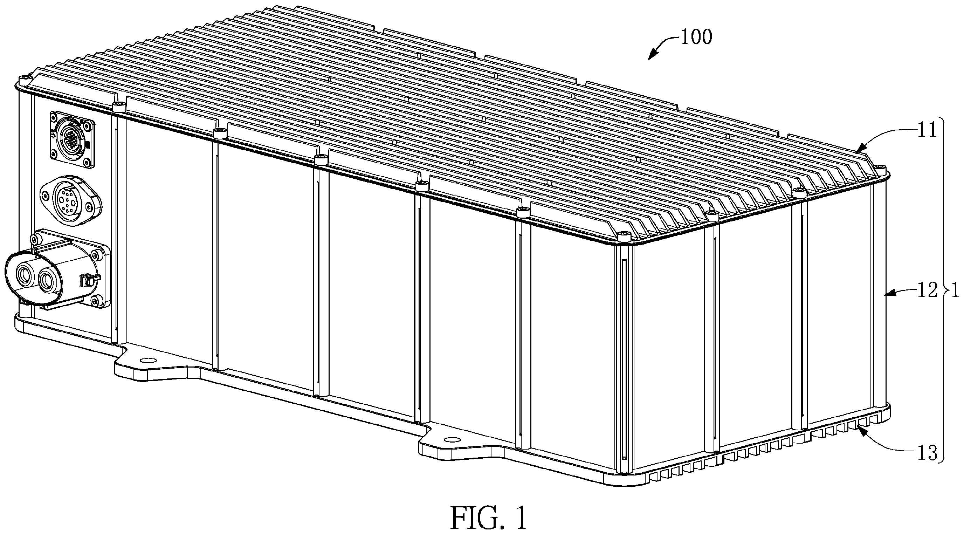

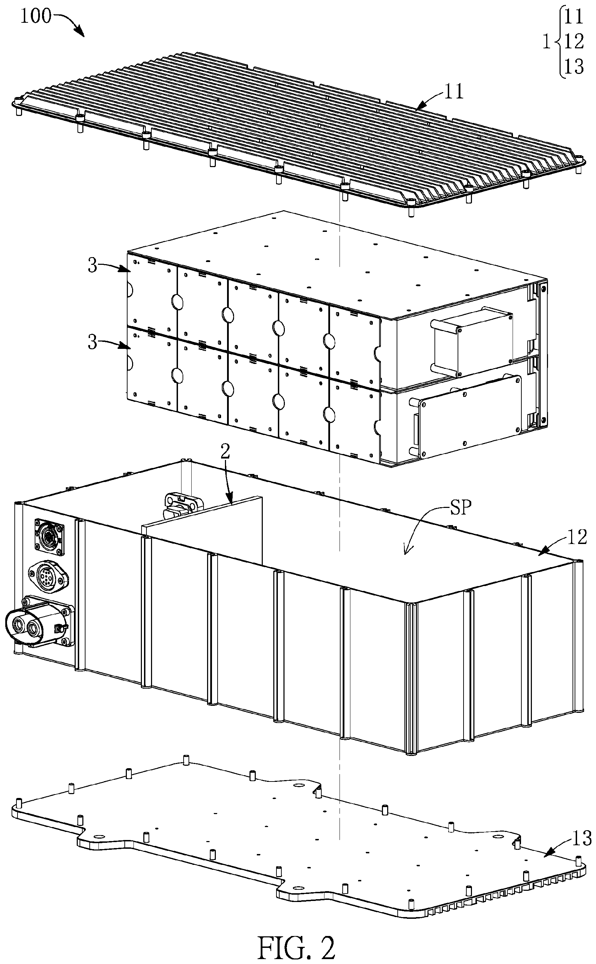

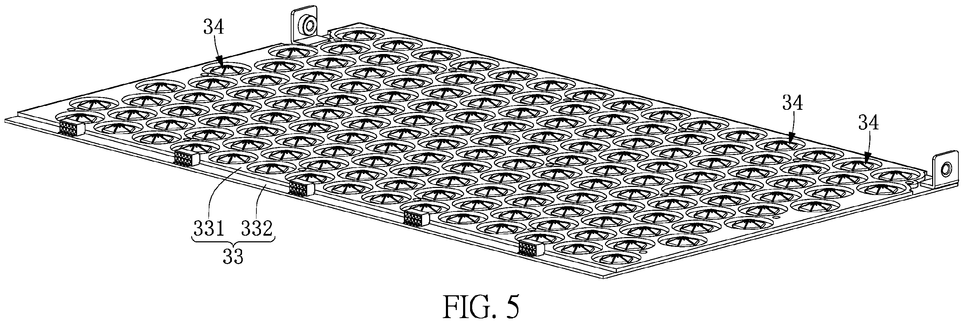

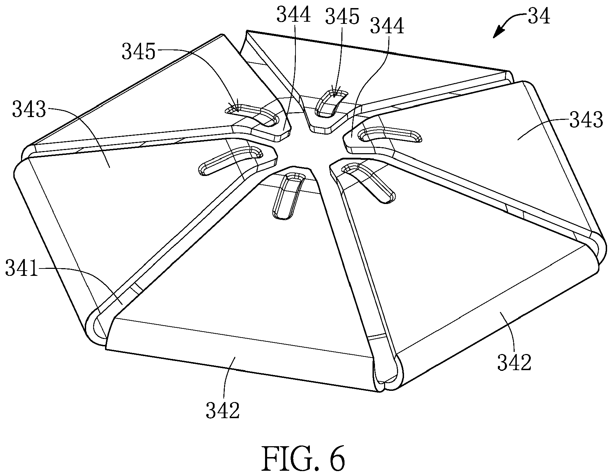

Referring to FIG. 1 to FIG. 9, a present embodiment of the present invention provides a battery device 100. As shown in FIG.1 and FIG. 2, the battery device 100 includes a containing shell 1, and a control module 2 and two battery modules 3 that are disposed in the containing shell 1. The following description describes the structure and connection relation of each component of the battery device 100.

Referring to FIG. 1 and FIG. 2, the containing shell 1 in the present embodiment includes an upper cover 11, an annular frame 12, and a lower cover 13. The upper cover 11 and the lower cover 13 are respectively disposed on two sides of the annular frame 12, such that the upper cover 11, the annular frame 12, and the lower cover 13 can jointly form an accommodation space SP.

Preferably, the containing shell 1 is made of a heat dissipation material (e.g., aluminum), and the upper cover 11 and the lower cover 13 may be made of an aluminum extrusion, so as to improve a heat dissipation effect of the containing shell 1.

Referring to FIG. 1 and FIG. 2, the control module 2 can be electrically coupled to the two battery modules 3, and the control module 2 can control and monitor a power supply and a state of each of the two battery modules 3. For example, the control module 2 controls an output power and a charging efficiency of each of the two battery modules 3, and monitors a temperature of each of the two battery modules. It should be noted that, since how the control module 2 controls and monitors each of the two battery modules 3 is known to those skilled in the art and is not the focus of the present invention, details thereof will not be described herein.

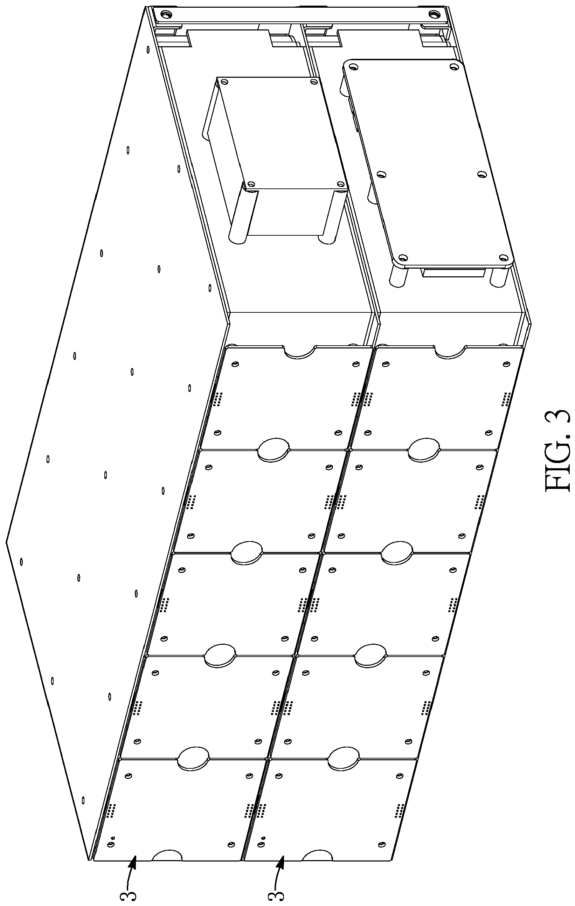

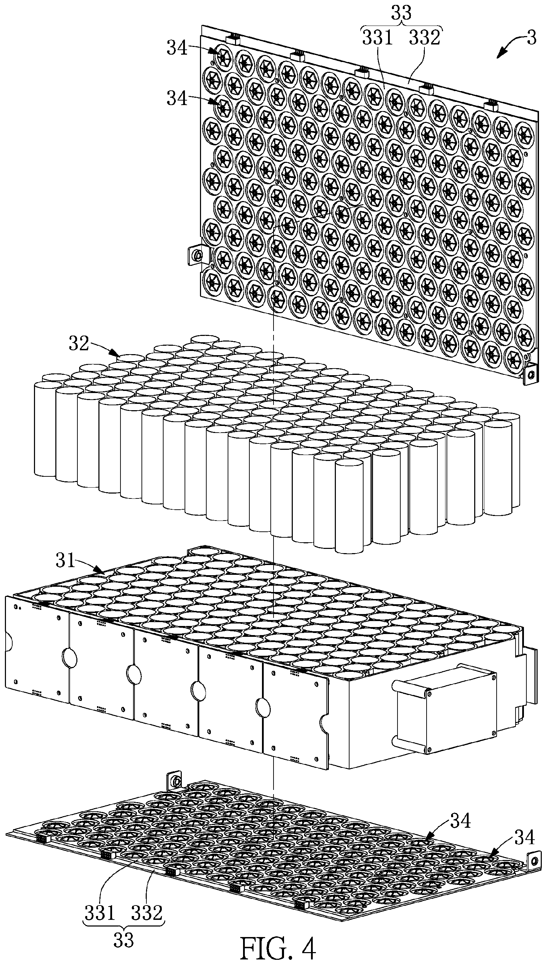

Referring to FIG. 3 and FIG. 4, each of the two battery modules 3 includes an insulating carrier 31, a plurality of electric cores 32 disposed in the insulating carrier 31, two substrates 33 disposed on two sides of the insulating carrier 31, and a plurality of elastic conductive elements 34 that are disposed on the two substrates 33. A quantity of the two battery modules 3 can be selectively increased or reduced, and the following description is made with respect to a single battery module 3.

In detail, the insulating carrier 31 has a plurality of groove structures, two sides of each of the groove structures are connected to an outer side of the insulating carrier 31, and each of the groove structures has an accommodation groove for accommodating one of the electric cores 32. The two substrates 33 are disposed on the two sides of the insulating carrier 31, and the two substrates 33 respectively correspond in position to the two sides of each of the groove structures to cover an opening of each of the groove structures. It is worth noting that the substrate 33 in the present embodiment may include an insulating thermal conductive plate 331 and an aluminum plate 332. More specifically, the aluminum plate 332 is located between the insulating thermal conductive plate 331 and the containing shell 1. In other words, a plurality of conductive lines are printed on one of two side surfaces of the aluminum plate 332, and another one of the two side surfaces of the aluminum plate 332 is used as a contact surface that can contact the containing shell 1 or other cooling components. Moreover, the insulating thermal conductive plate 331 is located between the aluminum plate 332 and the insulating carrier 31, so as to adjust a force between the elastic conductive elements 34 and the electric cores 32 by a thickness of the insulating thermal conductive plate 331.

Accordingly, the insulating thermal conductive plate 331 also can serve as an intermediary between the aluminum plate 332 and the containing shell 1 (or other heat dissipation elements), and each of the elastic conductive elements 34 can quickly conduct heat energy during a process of electrically coupling with (or contacting) the electric cores 32 to improve the heat dissipation effect.

Referring to FIG. 4 to FIG. 6, the elastic conductive elements 34 are respectively disposed on the two substrates 33, and the elastic conductive elements 34 can be electrically coupled to the two substrates 33 such that the electric cores 32 can contact the elastic conductive elements 34 to achieve series or parallel connections. In practice, each of the two substrates 33 can be printed with conductive lines according to designer requirements (e.g., the electric cores being in series connection, or the electric cores being in parallel connection).

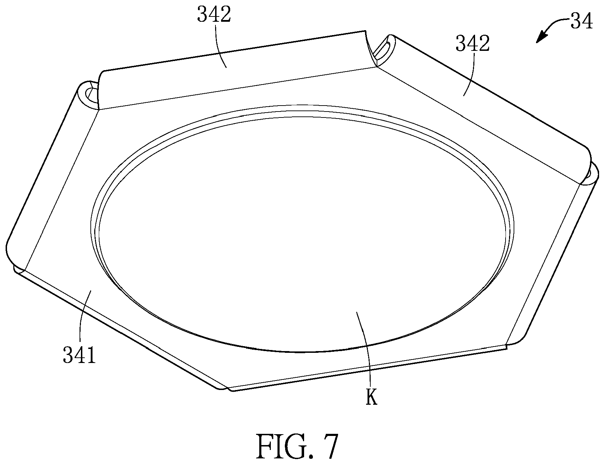

Referring to FIG. 7 to FIG. 9, in order to ensure that the elastic conductive elements 34 can still effectively ensure the electrical reliability between the elastic conductive elements 34 and the electric cores through non-welding or other permanent fixing manners (such as adhesion), each of the elastic conductive elements 34 may be made of conductive metal materials and includes a plate body portion 341, a plurality of bend portions 342, a plurality of connecting portions 343, and a plurality of end portions 344 that are integrally connected.

Specifically, the plate body portion 341 is a plate-like structure, and an edge of the plate body portion 341 is connected to one of two ends of each of the bend portions 342, that is, the bend portions 342 extend from the plate body portion 341. In addition, the bend portions 342 are spaced apart from each other, and another one of the two ends of each of the bend portions 342 are connected to the connecting portions 343.

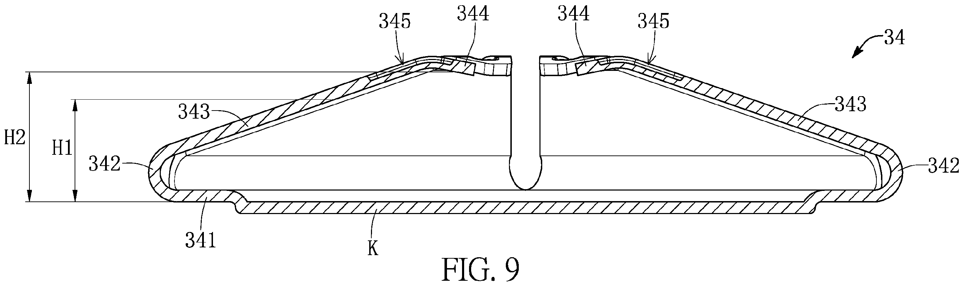

In detail, the connecting portions 343 respectively extend from the bend portions 342 on a central area of the plate body portion 341, and each of the connecting portions 343 and the plate body portion 341 are spaced apart from each other, so as to have a first height change H1 (as shown in FIG. 9). The first height change H1 gradually increases from the bend portions 342 on the center area of the plate body portion 341, such that each of the connecting portions 343 can have an elastic force through the bend portions 342. In other words, an included angle is between each of the connecting portions 343 and the plate body portion 341, and the included angle is within a range of from 0 degrees to 90 degrees. In addition, an end of each of the connecting portions 343 is connected to the end portion 344, and the end portion 344 can elastically abut against a corresponding one of the electric cores 32 through the connecting portion 343.

It is worth noting that, in order to further improve the electrical reliability between the elastic conductive elements 34 and the electric core 32, the end portion 344 of each of the elastic conductive elements 34 can also be designed to have additional elastic force to ensure contact force.

Specifically, each of the end portions 344 and the plate body portion 341 are spaced apart from each other, so as to have a second height change H2 (as shown in FIG. 9). The second height change H2 gradually increases from the bend portion 342 on the central area of the plate body portion 341. Accordingly, the end of each of the end portions 344 away from the connecting portion 343 can further generate additional elastic force based on the elastic force of the connecting portion 343, such that each of the end portions 344 can firmly abut against a corresponding one of the electric cores 32; however, the present invention is not limited thereto. For example, when the second height change H2 is gradually decreased, one end of each of the end portion 344 adjacent to the connecting portion 343 can still firmly abut against a corresponding one of the electric cores 32 through the elastic force of the connecting portion 343.

Preferably, in order to ensure a structural strength of each of the elastic conductive elements 34, each of the elastic conductive elements 34 further includes the concave grooves 345. In detail, each of the concave grooves 345 is formed between the connecting portion 343 and the end portion 344 that are connected to each other, and a depth of each of the concave groove 345 is less than or equal to half a thickness of the connecting portion 343 and the end portion 344. Accordingly, the concave groove 345 can strengthen the rigidity of the connecting portion 343 and the end portion 344 to avoid elastic fatigue (or metal fatigue).

In addition, the plate body portion 341 further includes a protruding block K that protrudes in a direction away from the connecting portions 343, and an area of the protruding block K is greater than half an area of a side of the plate body portion 341 away from the connecting portions 343. Accordingly, the protruding block K can strengthen the rigidity of the plate body portion 341.

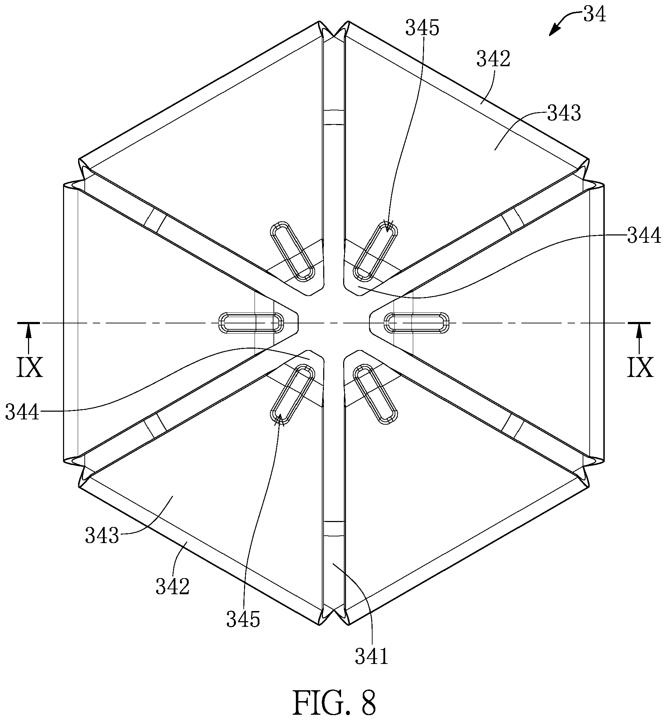

It is worth noting that, in order to ensure a maximum contact area between each of the elastic conductive elements 34 and the electric cores 32, each of a plurality of projection regions formed by orthogonally projecting the connecting portion 343 and the end portion 344 connected to each other on the plate body portion 341 is triangular (as shown in FIG. 8). Any two adjacent ones of the projection regions has one of a plurality of separation distances therebetween, and the separation distances are equal to each other. In addition, the plate body portion 341 of each of the elastic conductive elements 34 is in a shape of a regular polygon with N number of sides, and N being a positive integer greater than or equal to three (e.g., in the present embodiment, the plate body portion 341 is exemplified to be a regular hexagon, and N has a value of 6). A quantity of the bend portions 342, the connecting portions 343, and the end portions 344 of each of the elastic conductive elements 34 has a value of N, so as to match with the plate body portion 341.

It should be noted that, the containing shell 1, the control module 2, and the battery module 3 in the present embodiment are jointly defined as the battery device 100, but the present invention is not limited thereto. For example, the elastic conductive element 34 of the battery module 3 can be independently used (e.g., implemented, manufactured, or sold) or can be used in cooperation with other components.

### [Beneficial Effects of the Embodiment]

In conclusion, in the battery device and the elastic conductive element thereof provided by the present invention, by virtue of "the connecting portions respectively extending from the bend portions, and each of the connecting portions and the plate body portion being spaced apart from each other, so as to have a first height change that gradually increases from the bend portions on a center area of the plate body portion," and "each of the end portions being configured to elastically abut against a corresponding one of the electric cores through the connecting portions," the battery device and the elastic conductive element thereof can use a contact manner to achieve ideal electrical reliability between the elastic conductive element and the electric core.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope.

## Claims

1. A battery device (100), **characterized by** comprising:
a containing shell (1) having an accommodation space (SP);
a control module (2) disposed in the accommodation space (SP); and
a battery module (3) disposed in the accommodation space (SP), wherein the battery module (3) is electrically coupled to the control module (2), and includes:
an insulating carrier (31) having a plurality of accommodation grooves;
a plurality of electric cores (32) respectively disposed in the accommodation grooves;
two substrates (33) disposed on two sides of the insulating carrier (31); and
a plurality of elastic conductive elements (34) disposed on and electrically coupled to the two substrates (33) such that the electric cores (32) are configured to contact the elastic conductive elements (34) to achieve series or parallel connections, wherein each of the elastic conductive elements (34) includes:
a plate body portion (341);
a plurality of bend portions (342) extending from the plate body portion (341), wherein the bend portions (342) are spaced apart from each other;
a plurality of connecting portions (343) respectively extending from the bend portions (342), wherein each of the connecting portions (343) and the plate body portion (341) are spaced apart from each other, so as to have a first height change (H1) that gradually increases from the bend portions (342) on a center area of the plate body portion (341); and
a plurality of end portions (344) respectively extending from the connecting portions (343), wherein each of the end portions (344) is configured to elastically abut against a corresponding one of the electric cores (32) through the connecting portions (343).

2. The battery device (100) according to claim 1, wherein each of the end portions (344) and the plate body portion (341) are spaced apart from each other, so as to have a second height change (H2) that gradually decreases or increases from the bend portions (342) on the central area of the plate body portion (341).

3. The battery device (100) according to claim 1, wherein each of the elastic conductive elements (34) includes a plurality of concave grooves (345), each of the concave grooves (345) is formed in a position between the connecting portion (343) and the end portion (344) that are connected to each other, and a depth of each of the concave grooves (345) is less than or equal to half a thickness of the connecting portion (343) and the end portion (344).

4. The battery device (100) according to claim 1, wherein each of a plurality of projection regions formed by orthogonally projecting the connecting portion (343) and the end portion (344) connected to each other on the plate body portion (341) is triangular.

5. The battery device (100) according to claim 4, wherein any two adjacent ones of the projection regions has one of a plurality of separation distances therebetween, and the separation distances are equal to each other.

6. The battery device (100) according to claim 1, wherein the plate body portion (341) of each of the elastic conductive elements (34) is in a shape of a regular polygon with N number of sides, N being a positive integer greater than or equal to three, and wherein a quantity of the bend portions (342), the connecting portions (343), and the end portions (344) of each of the elastic conductive element has a value of N.

7. The battery device (100) according to claim 1, wherein the plate body portion (341) includes a protruding block (K) protruding in a direction away from the connecting portions (343), and wherein an area of the protruding block (K) is greater than half an area of a side of the plate body portion (341) away from the connecting portions (343).

8. The battery device (100) according to claim 1, wherein the substrate includes an insulating thermal conductive plate (331) and an aluminum plate (332), and wherein a plurality of conductive lines are printed on the aluminum plate (332), and the aluminum plate (332) contacts the insulating thermal conductive plate (331).

9. An elastic conductive element (34) of a battery device (100), **characterized by** comprising:
a plate body portion (341);
a plurality of bend portions (342) extending from the plate body portion (341), wherein the bend portions (342) are spaced apart from each other;
a plurality of connecting portions (343) respectively extending from the bend portions (342), wherein each of the connecting portions (343) and the plate body portion (341) are spaced apart from each other, so as to have a first height change (H1) that gradually increases from the bend portions (342) on a center area of the plate body portion (341); and
a plurality of end portions (344) respectively extending from the connecting portions (343), wherein each of the end portions (344) is configured to elastically abut against a corresponding one of the electric cores through the connecting portions (343).

10. The elastic conductive element according to claim 9, wherein each of the end portions (344) and the plate body portion (341) are spaced apart from each other, so as to have a second height change (H2) that gradually decreases or increases from the bend portions (342) on the central area of the plate body portion (341), and wherein the elastic conductive element (34) includes a plurality of concave grooves (345), each of the concave grooves (345) is formed in a position between the connecting portion (343) and the end portion (344) that are connected to each other, and a depth of each of the concave grooves (345) is less than or equal to half a thickness of the connecting portion (343) and the end portion (344).
